Europäisches Patentamt

(19) European Patent Office    (11) Publication number: **0 015 621**
Office européen des brevets                              **B1**

(12) **EUROPEAN PATENT SPECIFICATION**

(45) Date of publication of patent specification: **03.10.84**    (51) Int. Cl.³: **F 16 L 9/04,** C 10 G 9/20,
                                                                **B 21 C 37/15,** B 23 K 20/00
(21) Application number: **80200202.2**

(22) Date of filing: **29.02.80**

(54) **A tube for a cracking plant.**

(30) Priority: **02.03.79 NL 7901692**

(43) Date of publication of application:
**17.09.80 Bulletin 80/19**

(45) Publication of the grant of the patent:
**03.10.84 Bulletin 84/40**

(84) Designated Contracting States:
**BE DE FR GB NL**

(56) References cited:
**CH-A- 84 798**
**DE-C- 437 812**
**FR-A- 377 657**
**FR-A- 447 039**
**FR-A- 694 423**
**US-A-2 633 414**
**US-A-3 316 630**

(73) Proprietor: **B.V. KONINKLIJKE MAATSCHAPPIJ
"DE SCHELDE"
P.O. Box 16,
NL-4380 AA Vlissingen (NL)**

(72) Inventor: **Broodman, Johannes Jacobus
Wulpenlaan 9
NL-4511 XB Breskens (NL)**

(74) Representative: **van der Beek, George Frans, Ir.
et al
Nederlandsch Octrooibureau P.O. Box 29720
NL-2502 LS The Hague (NL)**

Courier Press, Leamington Spa, England.

## Description

The present invention relates to a composite tube comprising an inner tube, a coaxially placed outer tube, a tubular grating surrounding the inner tube and located between the outer tube and the inner tube, said grating leaving passages wherein said outer tube is bonded to said inner tube. Such a composite tube is disclosed in US—A—3,136,630.

When preparing ethylene starting from naphtha pyrolysis at a very high temperature is the sole process yet enabling to cope with the increasing demand for ethylene in a normal way. This process is performed in tubular furnaces, so called cracking furnaces in which a feed of saturated hydrocarbons, naphtha in case of ethylene, blended with steam is led through horizontally or vertically mounted tubes which are externally heated to a very high temperature by means of gas burners or oil burners. The endothermic cracking reaction occurs mainly in the radiation zone within the tubes at which the highest temperature prevails, that is in the course of a retention time of some seconds to some tenths of a second dependent on the installation employed. The hydrocarbon-steam mixture is heated thereby at a pressure of about 200 kPa and to a temperature of about 900°C. Subsequently the gaseous cracking effluent is forcibly quenched.

The recent known processes already reach a high degree of perfection so that any increase of the yield of ethylene is yet solely possible by increasing the cracking temperature and reducing the retention time. It has become possible to reach the above-mentioned temperature of 900°C by using highly alloyed nickel of extremely high cost, for instance 25—20 CrNi for the tubes, not being composite tubes. This highly alloyed nickel is the result of thorough research. The maximum tube wall temperature thereof amounts to about 1050°C at a temperature in the combustion chamber of about 1200°C.

Up till now, however, higher temperatures of the cracking gas are not feasible because the nickel alloys cannot withstand anymore the pressure of the cracking gas in the interior of the tube at yet higher temperatures.

US—A—3,316,630 describes a method for the manufacture of composite tubes comprising a relatively thin austenitic corrosive resistant lining bonded to a ferritic base tube giving the necessary strength to the composite body. The main difficulty with the conventional methods of cladding ferritic steel tubes by the application of heat and pressure being due to the presence of formation of oxides and other impurities at the interface resulting in an imperfect bonding effect between the lining and the base tube. The invention of the method in this U.S. Patent resides in producing a clad body from a base member and a protective metallic member, in which both members are arranged adjacent each other so that the faces to be joined confront each other in spaced relationship to form a gap therebetween. In the gap a spacer wire can be placed to keep the lining and base tube initially apart. This wire consists of austenitic or ferritic steel, the same as the material of the base tube. This material will not contribute to the strength of the end product i.e. the composite tube. A gaseous cleaning agent is then passed through the gap along the spaced faces, and subsequently the members are joined to each other at the aforementioned faces by pressing the members upon each other. During this pressing step the spacer wires are deformed and flattened between the lining and base tube.

However, this U.S. Patent does not disclose a composite tube for use in a cracking furnace withstanding the usual temperatures and pressure in said furnaces.

The object of the present invention is now to provide a tube for a cracking plant which may be operated at much higher tube wall temperatures and higher pressures than those possible at present. Consequently the yield of ethylene may be increased considerably. However, the use of these tubes is not restricted to the ethylene production.

The above-mentioned object is achieved by the tube according to the invention which tube is characterized in that said inner tube and said outer tube consist of nickel or a nickel alloy or cobalt alloys and in that said grating consists of molybdenum, tungsten or tantalum or alloys thereof.

The material of the tubular grating consists of the group of refractory metals and their alloys, having extremely high melting temperature, so that at the stated very high cracking temperature this reinforcement frame is still very strong and will hold the more weakened inner and outer tube material. Because of this reinforcement material it is possible to use for the inner and outer tubes an alloy of 70% and more of nickel. This results a.o. in a cracking tube of much smaller wall thickness than possible with the present known cracking tubes. Such smaller wall thickness offers a much higher heat transport through the tube wall which could not be reached before. In a tube of the present invention the inner and outer tubes need not consist of the same material, so that each tube can be adapted to its particular environment.

The tubular grating may be comprised of a netting or a braiding of wires, a braided mantle, though it also may be comprised of wires wound helically in opposite directions about the tube. There may also be wound a single winding on a plurality of parallel axially extending longitudinal wires placed on the inner tube. This tubular grating furthermore consists of an intermediate tube of a suitable material, for instance sheet material, provided with a large number of openings, holes or passages, enabling the formation of a firm bond between the inner and outer tube.

An excessive medium is a medium which may substantially shorten the life of material in contact with said medium at said high excessive temperatures for instance. It can be an aggressive or corrosive medium but also a radio-active medium.

For the inner tube and outer tube of the composite tube of the present invention particular material can be used withstanding a predetermined excessive medium, without paying much attention to the tensional and compressive through characteristics of these materials. These characteristics apply to the reinforcement means only. Therefore a wide choice of materials for the inner and outer tubes is possible. Molybdenum and alloys in view of their strength thereof are suited in particular for the reinforcement. Under the influence of oxygen this material if unprotected would be subject to immediate oxidation at the said high temperature. This reinforcement is, however, completely embedded by the surrounding tubes of nickel or alloys thereof and consequently very effectively protected against the surrounding medium. At the same time the reinforcement imparts the necessary firmness to the tube for withstanding the process pressure as well as a sufficient strength in the longitudinal direction of the tube.

Instead of molybdenum one may, however, also use other suitable materials such as tungsten, tantalum or alloys thereof.

The fusion bond between the two coaxial tubes within the openings between the reinforcement parts of course provides for the necessary good heat transfer from the exterior of the tubes where contacting the combustion gases to the interior thereof containing the steam and/or the cracking gas. This fusion bond also provides for a good sealing in axial direction between the tubes if a leakage would occur in one of the tube walls.

Upon using composite tubes of the present invention consisting of alloys and molybdenum, cracking gas temperatures may be reached up to 1300°C at a pressure of 300 kPa (3 atmosphere) or higher. This much higher temperature than the one maximally feasible up till now, i.e. 900°C, causes a very high increase of the efficiency, that is to say a much higher yield of ethylene at the same amount of natural gas burnt.

Upon pressurizing the composite tube is simultaneously heated to a temperature of about 1300°C. Such heating may be performed along the entire length of the tube but also within a short heating furnace surrounding the tube over part of its length through which furnace the tube is passed in the longitudinal tube direction or which furnace is passed in longitudinal direction along the tube.

When the tube reaches the said high furnace temperature the limit of stretching strain of the tube material is surpassed so that two coaxial tubes under the above mentioned high pressure and the desired vacuum within the gap are forced towards each other in such a degree that the material of the tubes is forced into the opening between the parts or wires of the reinforcement and is bonded together at these locations by pressure or fusion welding. The parts or wires of the reinforcement are embedded completely on all sides within the material of the coaxial tubes so that the material of the reinforcement is completely protected against the exterior and the interior media of the tubes whereas the wires may neither be shifted or moved anymore.

It goes without saying that the material of the reinforcement should be of such a nature that the reinforcement maintains its shape at the high temperature of the limit of stretching strain of the material of the tubes.

The invention will now be elucidated in detail with reference to the drawings representing an embodiment of a tube according to the invention.

Fig. 1 represents a composite tube according to the invention partially in cross section before the inner and the outer tube have been bonded together;

Fig. 2 represents a tube according to the invention in cross section after fusion welding of the inner tube to the outer tube and the application of a sealing ring to the left hand end face by weld coating. The tube shown in Figure 2 has been rotated over 90° around the axis with respect to the tube in Fig. 1.

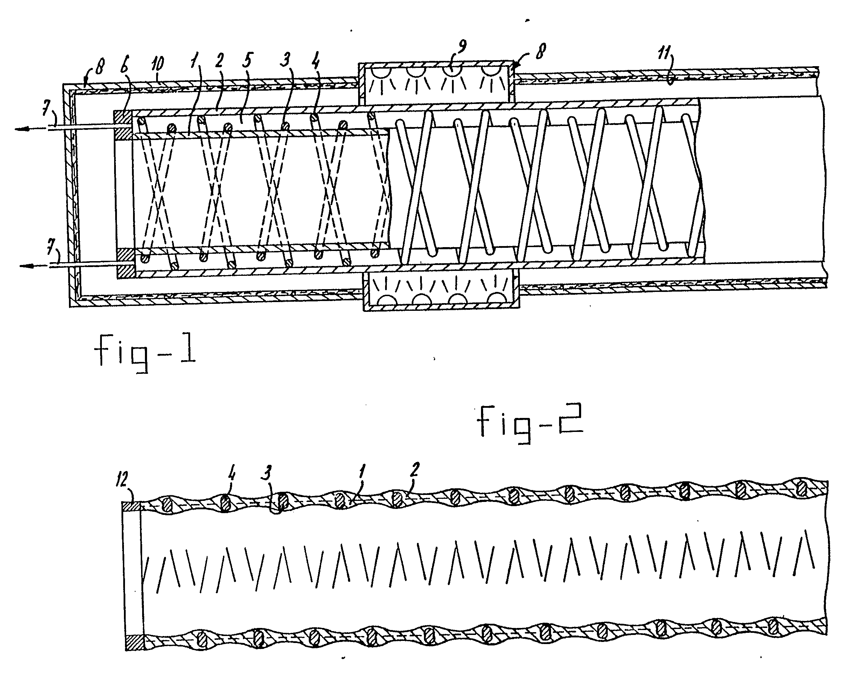

With reference to Fig. 1 there has been shown one end of a tube according to the invention of which the left hand part in the figure has been drawn entirely in cross section, that is to say through both the coaxial tubes. The middle part shows solely the outer tube in cross section whereas the right hand part represents the outer tube in side elevation.

In the represented instance of this example the inner tube 1 preferably consisting of nickel or a nickel alloy, has been provided with a reinforcement, comprising two molybdenum wires 3 and 4 firmly wound helically and cross wise in opposite directions. In the left hand part of fig. 1 the wires 3 and 4 are also shown in cross section, the fully drawn lines representing the courses of these wires at the back side of the inner tube 1. The middle part shows the interior of the inner tube 1 as well as the molybdenum wires 3 and 4 wound cross wise about this tube.

The outer tube 2, preferably in a close fitting manner, is slid over this wire reinforcement until the end faces of the two tubes have reached the coplanar position in the left hand part of the drawing, and in the not shown right hand part as well. The tube 2 should be slid in a so closely fitting or slidingly fitting manner over the molybdenum wires 3 and 4 that there will yet remain a sufficient number of axial passages for enabling the evacuation of the entire gap 5 along the entire length of the tube.

The thus formed combination of tubes 1 and 2 and wires 3 and 4 is then introduced into a gas pressure chamber-furnace combination 8. This pressure furnace combination 8 may include a thermally insulated tight pressure wall 10 having a heat insulation 11 which furnace combination surrounds the tubes to be welded entirely and has been filled preferably with an inert gas. This pressure furnace combination 8 is depicted in Fig. 1 diagrammatically only. The furnace is heated by means of radiation elements 9. The required pressure is achieved by increasing the pressure of the inert filling gas.

The extremities of the tubes 1 and 2 giving excess to the initial inner gap 5 may be sealed off provisionally for instance by welding or by means of rings 6 in which there have been provided suction openings for tubes 7 for evacuating the gap. The tubes 7 communicate with the said inner gap 5 and lead to one or more not shown vacuum pumps which have been arranged outside the pressure chamber furnace combination 8.

The operative furnace part may be in the shape of a ring or a short tubular section projecting from the pressure wall and also arranged coaxially about the tubular combination like the pressure wall.

The tubular combination may then be moved lengthwise through the pressure furnace 10, 8 or the tubular combination may be mounted stationary while the pressure furnace 10, 8 is moved in the longitudinal direction along the tubular combination.

After introducing the tubular combination into the pressure chamber vacuum conditions are created in the inner gap 5. In case the tubes consist of nickel or a nickel alloy and the reinforcement consists of molybdenum wires 3 and 4 the pressure in the pressure chamber is then increased until a pressure of from 4500 to 5000 kPa (45—50 atmospheres) is exerted on the inner surface of the inner tube 1 and on the outer surface of the outer tube 2. Preferably the vacuum conditions in the inner gap 5 are maintained when the said pressure is exerted. In the furnace 8, 10 the tubular combination is heated to a temperature of about 1300°C also upon using nickel or a nickel alloy for the tubes. At the location where this temperature is reached the pressure exerted on the tubes 1 and 2 and the vacuum conditions between the tubes 1 and 2 will then force the tubes towards each other upon surpassing the limit of stretching strain of the tube material whereby first the evacuated axial gap between the wires 3 and 4 is filled. The pressure and the temperature should finally be increased to such a value that the material of the tube 1 and of the tube 2 is subject to a complete fusion in the said gap between the wires, that is to say that there will be generated a fusion weld of excellent quality between the tubes 1 and 2 completely embedding the wires 3 and 4.

In Fig. 1 there has been represented an embodiment in which, as stated above, two uninterrupted wires 3 and 4 have been wound crosswise on and around the inner tube 1. It will be evident however that the invention is not restricted to this embodiment. Instead of two wires one may use more wires which may for instance be wound between one another. The winding pitch does not have to be constant everywhere and may for instance be chosen smaller at higher temperature locations.

Likewise there may first be placed several parallel wires on the inner tube 1 in the longitudinal axial tube direction on which one or more wires are then wound helically.

When choosing the wall thickness of the tubes 1 and 2 one will of course have to take in account that there will remain yet a sufficient rest wall thickness between the exterior tube surfaces and the wires, also at the locations where two wires 3 and 4 intersect each other and rest upon each other and that these wires also remain completely embedded on all sides.

The invention is not restricted either to wires having a round cross section. Instead of wires one may use bands or strips or even a relatively wide meshed woven tubular netting. Likewise use may be made of a tubular reinforcement of sheet material having a large number of openings distributed over the entire reinforcement through which the material of the tubes 1 and 2 may fuse together.

From the partial cross section of a tube according to the invention as shown in Fig. 2 it is apparent that the completed tube possesses a corrugated outer surface this being the result of the movement of the tube material towards each other between the wires 3 and 4. The interrupted line drawn at the location of the imaginary cylinder plane of the wires 3 indicate the position where the two tubes 1 and 2 have been bonded together. This line however is only an imaginary line because in practice the fusion is so complete that no material transition may be observed.

The end faces of the pipe sections bonded together may be covered by a ring 12 which is preferably obtained by building up welding. This ring may be constituted by the ring 6 represented in Fig. 1 and will preferably be composed of the same material as the material of the tubes 1 and 2.

As a cracking plant in which the tubes according to the present invention are used there may be conceived an arrangement including uninterrupted tubes having a length of 10—20 m and an outer diameter of 130 mm in which the likewise uninterrupted reinforcement has been provided as a single fabrication step. It will be evident however that likewise tubes of different sizes may be produced and used in cracking plants. Since tubes having a large diameter and small wall thicknesses may be produced in accordance with the invention there originates the benefit of a smaller temperature differential over the wall as well as the possibility to apply higher heat current densities. The slight temperature differential across the wall moreover leads to an increase of the maximally feasible process temperature of the medium within the tube. The possibility of using tubes of a sufficient strength and having a large diameter has a favourable effect on the heating surface extension to be installed.

## Claims

1. Composite tube comprising an inner tube (1), a coaxially placed outer tube (2), and tubular grating (3, 4) surrounding the inner tube (1) and located between the outer tube (2) and the inner tube (1), said grating (3, 4) leaving passages wherein said outer tube (2) is bonded to said inner tube (1), characterized in that said inner tube (1) and said outer tube (2) consist of nickel or a nickel alloy or cobalt alloys and in that said grating (3, 4) consists of molybdenum, tungsten or tantalum or alloys thereof.

2. The tube of claims 1, characterized in that the grating (3, 4) consists of several wires wound crosswise in opposite direction about the inner tube (1).

3. The tube of claim 1 or 2, characterized in that the inner (1) and outer (2) tubes consist of Inconel 601.

## Patentansprüche

1. Verbundrohr aus einem inneren Rohr (1), einem koaxial angeordneten äußeren Rohr (2), einem Rohrförmigen Gitter (3, 4), welches des innere Rohr (1) umgibt und zwischen dem äußeren Rohr (2) nd dem inneren Rohr (1) angeordnet ist, wobei das Gitter (3, 4) Durchgänge freiläßt, in denen das äußere Rohr (2) an das innere Rohr (2) gebunden ist, dadurch gekennzeichnet, daß das innere Rohr (1) und das äußere Rohr (2) aus Nickel oder einer Nickellegierung oder Kobaltlegierungen bestehen und daß das Gitter (3, 4) aus Molybdän, Wolfram oder Tantal oder Legierungen davon besteht.

2. Rohr nach Anspruch 1, dadurch gekennzeichnet, daß das Gitter (3, 4) aus mehreren Drähten besteht, die kreuzweise in entgegengesetzter Richtung um das innere Rohr (1) herumgewickelt sind.

3. Rohr nach Anspruch 1 oder 2, dadurch gekennzeichnet, daß das innere Rohr (1) und das äußere Rohr (2) aus Inconol 601 bestehen.

## Revendications

1. Tube composite comprenant un tube intérieur (1), un tube extérieur (2) placé coaxialement, un treillis tubulaire (3, 4) entourant le tube intérieur (1) et situé entre le tube extérieur (2) et le tube intérieur (1), ledit treillis (3, 4) laissant des passages dans lesquels ledit tube extérieur (2) est relié audit tube intérieur (1), caractérisé par le fait que ledit tube intérieur (1) et ledit tube extérieur (2) sont formés de nickel ou d'un alliage de nickel ou d'alliages de cobalt et en ce que ledit treillis (3, 4) est formé de molybdène, de tungstène ou de tantale ou de leurs alliages.

2. Tube selon la revendication 1, caractérisé par le fait que le treillis (3, 4) consiste en plusieurs fils enroulés de façon croisée dans des directions opposées autour du tube intérieur (1).

3. Tube selon la revendications 1 ou 2, caractérisé par le fait que les tubes intérieur (1) et extérieur (2) sont en Inconel 601.

fig-1

fig-2